# EUROPÄISCHE PATENTSCHRIFT

(11) **EP 1 048 205 B1**
(45) Veröffentlichungstag und Bekanntmachung des Hinweises auf die Patenterteilung: **25.06.2003**
(21) Anmeldenummer: 00107562.1
(22) Anmeldetag: 07.04.2000
(51) Int. Cl.: A01K 1/015, A01K 1/01

(54) **Stallbodeneinrichtung**
Stable floor
Sol d'étable

(30) Priorität: 28.04.1999 DE 19919229
(43) Veröffentlichungstag der Anmeldung: 02.11.2000
(73) Patentinhaber: Greten, Alfons, 49632 Essen (DE); Lammers, Dieter, 26901 Rastdorf (DE); Lauscher, Michael, Dipl.Ing., 40624 Löningen (DE)
(72) Erfinder: Greten, Alfons, 49632 Essen (DE); Lammers, Dieter, 26901 Rastdorf (DE); Lauscher, Michael, Dipl.Ing., 40624 Löningen (DE)
(74) Vertreter: Busse & Busse Patentanwälte

(56) Entgegenhaltungen:
- DE-A- 3 229 671
- DE-U- 29 816 589
- NL-A- 9 101 388

## Beschreibung

Die Erfindung bezieht sich auf eine Stallbodeneinrichtung zur Bildung eines Stallbodens für einen Aufenthalt von Tieren, insbesondere Rindern und Schweinen, nach dem Oberbegriff des Anspruchs 1.

Stallbodeneinrichtungen dieser Art sind aus der DE 298 16 589 U1 im Bereich der Schweinemast bekannt. Die Tiere halten sich auf Spaltenböden auf, unterhalb derer eine schräge Fläche mit Gefälle zu einer Urinrinne angebracht ist. Kot und Harn gelangen gemeinsam durch den Spaltenboden und trennen sich auf der Bodenfläche dadurch, daß der feste Kot auf der Schrägen liegen bleibt und der Harn in die Rinne abfließt. Die Bodenfläche und die Harnrinne werden durch regelmäßiges Abschieben gereinigt.

Dadurch, daß der Kot und der Harn der Tiere an nahezu gleicher Stelle der Bodenfläche auftritt und sich zunächst vermengen, ist die anschließende Trennung in festen Kot und flüssigen Harn nur ansatzweise gegeben mit der Folge, daß Gülle entsteht, die durch einen ständigen Gärprozeß Belastungen sowohl der Stallluft als auch der Außenluft verursacht.

Desweiteren sind Balken oder rostförmige Stahlbetonbauelemente zum Aufbau von Flächenspaltenböden für Viehstallungen aus der DE 32 29 671 C2 bekannt. Die Anordnung und Form von Durchtrittsöffnungen in der von den Trittelementen dargebotenen Aufenthaltsfläche für die Tiere hat dabei die Aufgabe, zum einen die Aufenthaltsfläche möglichst sauber zu halten, indem der Kot und Harn der Tiere durch die hierfür gemeinsam vorgesehenen Durchtrittsöffnungen nach unten in den Aufnahmeraum als Lagerraum für die Tierexkremente abgeleitet werden und zum anderen die Durchtrittsspalten von anhaftendem Kot und dadurch verursachten Verstopfungen freizuhalten. Dazu ist an den Seitenflächen der Durchtrittsspalte zunächst eine Kotabreißkante horizontal dicht gefolgt von einer Abtropfkante für Harn angebracht. Hierbei vermengen sich der Kot und der Harn der Tiere und es entsteht Gülle.

Die durch den Gärprozeß in Folge der Güllebildung erzeugten Gase z.B. Ammoniak, beeinträchtigen das Wohlbefinden und die gesunde Entwicklung der Tiere, und es entstehen die bekannten Geruchsbelästigungen in der Stallumgebung und auch später bei der Aufbringung der Gülle auf das Feld als Dünger. Wegen der großen Mengen der durch Aufbringung auf das Feld zu entsorgenden Gülle sind in diesem Zusammenhang in Gebieten mit hohem Tierhaltungsaufkommen extreme Überdüngungen der landwirtschaftlichen Nutzflächen festgestellt worden, die zu Mengenbeschränkungen bei der Gülledüngung, bezogen auf die Flächeneinheit, geführt haben und dadurch generell Probleme bei der Gülleentsorgung zur Folge hatten.

Der Erfindung liegt die Aufgabe zugrunde, eine Stallbodeneinrichtung zur Bildung von Stallböden zu schaffen, durch deren Einsatz die bei der Tierhaltung mit der Güllebildung verbundenen Belastungen wie auch die bestehenden Probleme bei der Entsorgung der Gülle vermeidbar sind.

Diese Aufgabe wird nach der Erfindung durch eine Ausgestaltung der Stallbodeneinrichtung gemäß dem kennzeichnenden Teil des Anspruchs 1 gelöst.

Dadurch, daß bei dieser Ausgestaltung die Öffnungsränder der gemeinsamen Durchtrittsöffnungen für Kot und Harn mit Harnleitflächen versehen sind, die dem Harn eine aus der vertikalen Fallebene des Kotes fortweisende Fließrichtung zum Aufnahmeraum hin vorgeben, wird, obwohl Kot und Harn durch gemeinsame Durchtrittsöffnungen abgeleitet werden, eine Trennung des Harns vom Kot bereits während ihrer Fallbewegung zum Aufnahmeraum hin erreicht. Der Aufnahmeraum selbst hat im Zusammenwirken mit den voneinander getrennten vertikalen Fallebenen von Kot und Harn eine Bodenfläche, die einerseits als Ablagerungsfläche für den Kot und andererseits, getrennt von der Kotablagerung, als Harnauffang- und -abführfläche für den Harn dient. Der Kot sammelt sich hierbei im wesentlichen senkrecht unter den Durchtrittsöffnungen der Trittelemente, bei deren bevorzugter Ausbildung als Spaltenplatten mit Durchtrittsspalten als Durchtrittsöffnungen dammartig, auf der Bodenfläche des Aufnahmeraums, während der Harn seitlich dieser Kotansammlungen von der Bodenfläche des Aufnahmeraums aufgefangen und in zumindest eine Harnsammel- und -ableitrinne abgeleitet wird. Durch die Harnrinne erfolgt eine Abführung des Harns getrennt von dem abgelagerten Kot. Das Entstehen von Gülle aus einer Vermischung von Harn und Kot im Aufnahmeraum wird dadurch vermieden.

Damit sind zugleich die Belastungen durch Güllebildung bei der Tierhaltung aufgehoben und die Probleme der Entsorgung großer Güllemengen beseitigt. Durch das voneinander getrennte Ablagern und Abführen von Kot und Harn wird das Stallklima wesentlich verbessert und insbesondere kann die Entstehung von Ammoniak insgesamt durch das getrennte Ablagern und die getrennte Abführung von Kot und Harn vermieden werden. Dies begünstigt vor allem auch die Entwicklung der auf dem erfindungsgemäß ausgebildeten Stallboden gehaltenen Tiere. Die Entsorgung des Harns ist im Vergleich zu Gülle einfach durchzuführen, da er als Jauche als Naturdünger mit vergleichsweise abgeschwächtem Düngeeffekt auf das Feld aufgebracht oder aber nach an sich bekannten Behandlungsverfahren verdunstet werden kann. Der Kot kann seinerseits nach an sich bekannten Verfahren getrocknet und zu gezielt einsetzbaren Düngemitteln verarbeitet werden.

In Verbindung mit einem nach der Erfindung ausgebildeten Stallboden kann das Stallklima mit Hilfe eines Lüftungssystems, das Zuluft und Abluft in Kombination verwendet, weiter verbessert werden. Hierbei wird die Abluft aus dem Stall je nach Bedarf der Zuluft wieder beigemischt, wobei es möglich ist, die Zuluftmenge so groß zu wählen, daß das Aufsteigen von etwaigen Schadstoffen unterbunden wird. Der Unterschied zwischen der Raumtemperatur im Stall und der Zulufttemperatur kann nach Art eines Mischsystems so ausgelegt werden, daß keine Zugerscheinungen im Bereich der Tiere auftreten können. Bei einem derartigen Lüftungssystems kann die durch Normvorschriften und Tierhaltungsverordnungen geforderte maximale Umluftmenge in Verbindung mit dem erfindungsgemäß ausgebildeten Stallboden deutlich unterschritten werden, da durch die nach der Erfindung vorgesehene Trennung von Kot und Harn und deren getrennte Ableitung der Schadstoffanfall, insbesondere die Erzeugung von Ammoniak, auf ein Minimum herabgesetzt werden kann. Ein solches Lüftungssystem kann daher sehr wirtschaftlich arbeiten, da im wesentlichen nur der Frischluft- bzw. Sauerstoffanteil, den die Tiere verbrauchen, wieder zugeführt werden muß. Eine kontinuierlich entgegen der Thermik im Stall wirkende Luftströmung kann dabei zugleich eine günstige abtrocknende Wirkung auf die im Aufnahmeraum abgelagerten Kotdämme ausüben und insgesamt einem Aufsteigen verbrauchter bzw. restbelasteter Stalluft entgegenwirken.

Zahlreiche weitere Merkmale und Vorteile der Erfindung ergeben sich aus den Unteransprüche und der nachstehenden Beschreibung in Verbindung mit der Zeichnung, in der ein Ausführungsbeispiel des Gegenstands der Erfindung schematisch veranschaulicht ist. In der Zeichnung zeigt:
- Fig. 1: eine Draufsicht auf eine Stallbodeneinrichtung nach der Erfindung,
- Fig. 2: einen Schnitt nach der Linie II-II der Fig. 1,
- Fig. 3: eine Draufsicht auf ein einzelnes Trittelement, das bei der Einrichtung nach den Fig. 1 und 2 Verwendung findet,
- Fig. 4: einen Schnitt nach der Linie IV-IV der Fig. 3,
- Fig. 5: die Schnittdarstellung gemäß Fig. 4 in gegenüber dieser vergrößertem Maßstab, und
- Fig. 6: eine perspektivische Darstellung der erfindungsgemäßen Stallbodeneinrichtung mit angedeuteten Kotablagerungen,

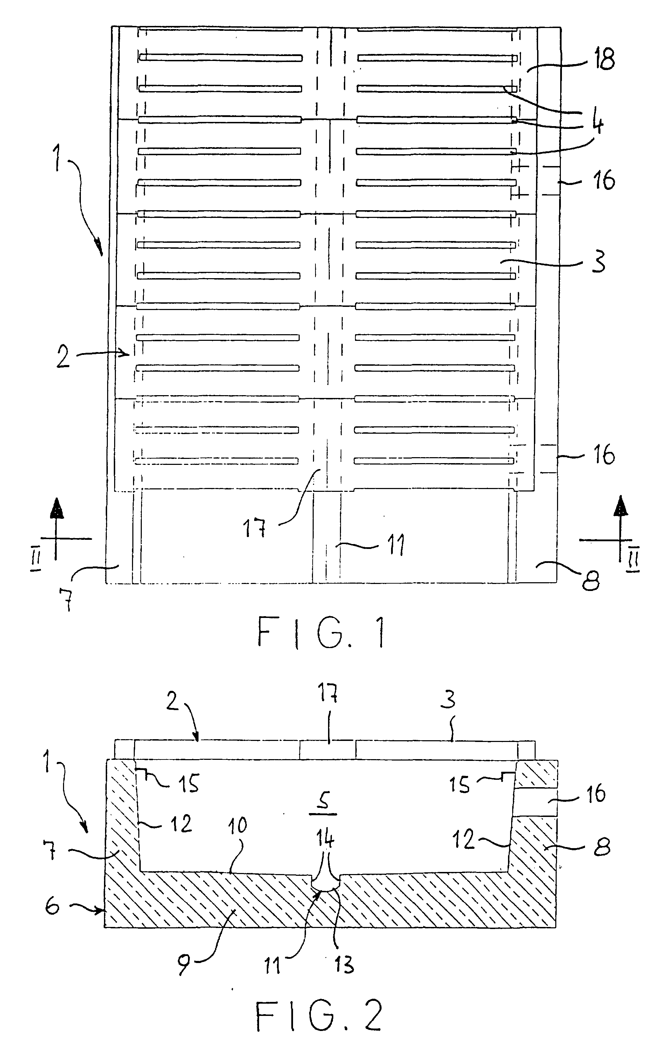

Wie sich zunächst aus den Fig. 1 und 2 ergibt, umfaßt die als Ganzes mit 1 bezeichnete Stallbodeneinrichtung oberseitig eine Mehrzahl von Trittelementen 2, deren Oberflächen 3 eine Aufenthaltsfläche für die Tiere darbieten, die auf einem aus einer Mehrzahl von Stallbodeneinrichtungen 1 zusammengesetzten Stallboden aufgestallt sind. Die sich aus den Oberflächen 3 zusammensetzende Aufenthaltsfläche ist von einer Anordnung von Durchtrittsöffnungen 4 unterbrochen, durch die der Kot und Harn der Tiere gemeinsam in einen Aufnahmeraum 5 abgeleitet werden.

Der Aufnahmeraum 5 ist von einer Aufnahmewanne 6 gebildet, die aus einem einstückig geformten bewehrten Betongußkörper gebildet ist. Statt dessen kann die Aufnahmewanne 6 auch aus vorgeformten einzelnen bewehrten Betongußkörpern zusammengesetzt sein.

Wie insbesondere Fig. 2 zeigt, hat die Aufnahmewanne 6 einen Querschnitt in der Grundform eines U-Profils, dessen aufrechte Schenkel die Seitenwände 7 und 8 des Aufnahmeraums 5 bilden. Zwischen den Seitenwänden 7, 8 erstreckt sich als U-Profilbasis der Wannenboden 9, dessen Oberfläche 10 eine Harnrinne 11 als Sammel- und Ableitrinne enthält.

Die Harnrinne 11 hat einen Verlauf parallel zur Längserstreckung der Seitenwände 7, 8 des Aufnahmeraums 5 und ist bei dem dargestellten Beispiel mittig zwischen diesen angeordnet. Die Bodenfläche 10 des Wannenbodens 9 hat, ausgehend von den Seitenwänden 7 und 8, ein geringes Gefälle von etwa 0,5 bis 2% zur Harnrinne 11, so daß der auf die Bodenoberfläche 10 gelangte Harn in die Harnrinne 11 fließen kann. Günstig für die Ableitung des Harns wirkt sich auch der Umstand aus, daß die Innenflächen 12 der Seitenwände 7 und 8 zur Bodenfläche 10 hin konvergieren.

Wie insbesondere aus Fig. 2 ersichtlich ist, hat die Harnrinne 11 einen als Hohlkehle ausgebildeten Boden 13, während sie seitlich von zwei senkrechten parallelen Seitenwänden 14 begrenzt ist, die sich an die Bodenfläche 10 des Aufnahmeraums 5 anschließen. Die Seitenwände 14 der Harnrinne 11 können Führungsflächen für einen Kotschieber bilden.

Statt dessen oder zusätzlich können die Seitenwände 7, 8 des Aufnahmeraums 5 innenseitig mit Führungsschienen 15 für einen Kotschieber versehen sein. Die Führungsschienen 15 können dauerhaft oder lösbar an der Innenseite 12 der Seitenwände 7, 8 des Aufnahmeraums 5 angebracht sein.

Wandseitig ist der Aufnahmeraum 5 mit einer oder mehreren Durchgangsöffnunungen 16 für einen Leitungsanschluß eines Lüftungssystems versehen, wobei gemäß dem dargestellten Beispiel zwei solcher Durchgangsöffnungen 16 in der Seitenwand 8 des Aufnahmeraums 5 vorgesehen sind.

Im übrigen erweist es sich für die Ableitung der Tierexkremente in den Aufnahmeraum 5 als günstig, die Innenflächen 12 seiner Seitenwände 7, 8, wie auch die Bodenfläche 10 und die Rinne 11, glatt zu bearbeiten. Die genannten Flächen können zu dem gleichen Zweck und zum Schutze des bewehrten Betons der Wanne 6 vor den aggressiven Bestandteilen der Tierexkremente mit einem wasserundurchlässigen, korrosionsfesten Kunststoffüberzug versehen sein.

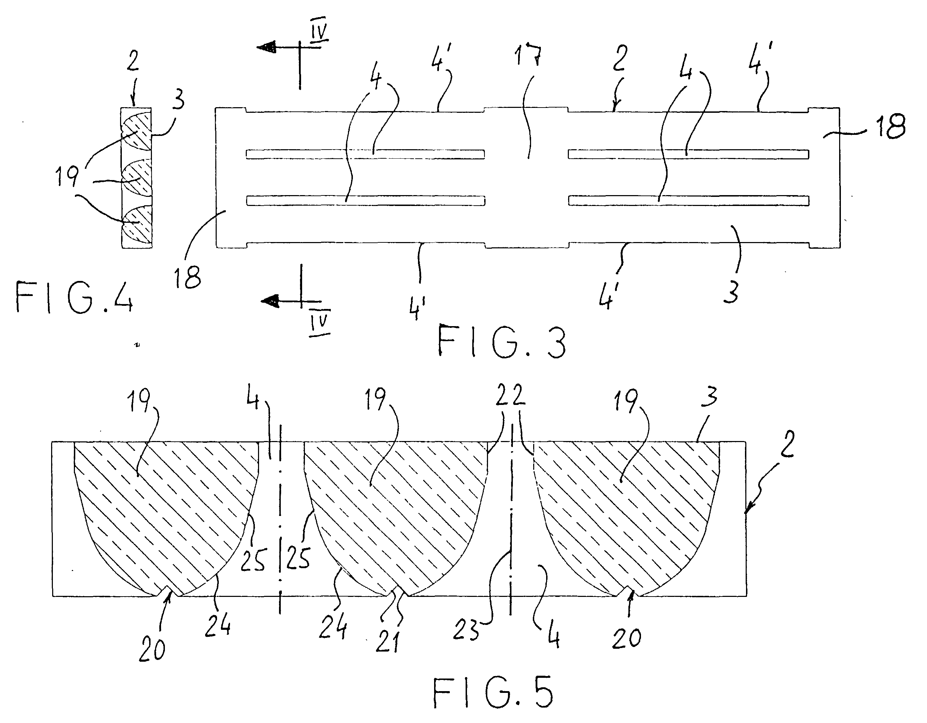

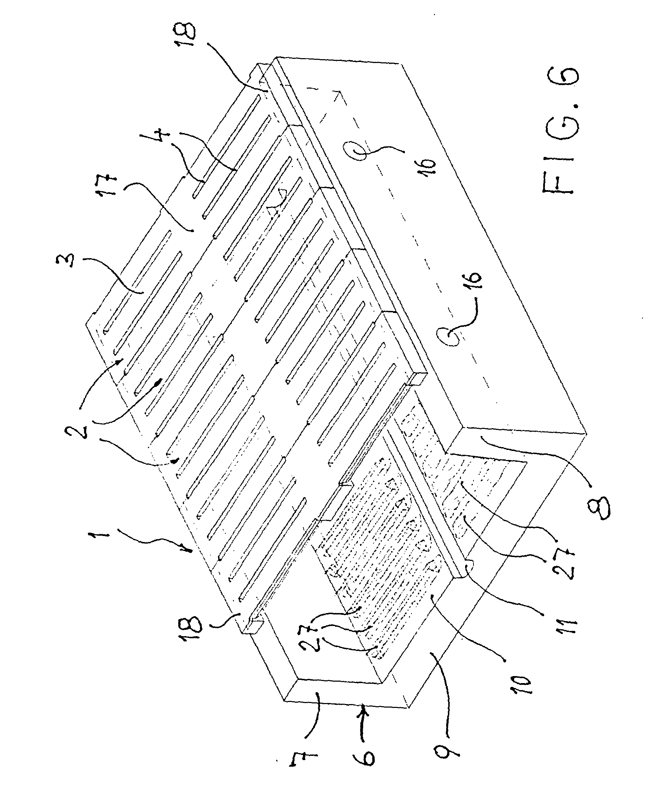

Die Trittelemente 2 sind bei dem dargestellten Beispiel von Spaltenplatten gebildet, die ihrerseits aus selbsttragenden bewehrten Betonformkörpern bestehen. Die Durchtrittsöffnungen 4 sind hierbei spaltförmig ausgebildet. Bei dem dargestellten Beispiel sind jeweils zwei parallele Durchtrittsspalte 4 beidseits eines von Durchtrittsöffnungen freigehaltenen, geschlossenen Zwischenstegs 17 in Querausrichtung zu diesem in der Platte 2 angeordnet. Die Durchtrittsspalte 4 erstrecken sich dabei von dem geschlossenen Steg 17 jeweils zu einem seinerseits geschlossenen Rand 18 der Platte 3. Parallel zu den Durchtrittsspalten 4 verlaufen in Draufsicht (Fig. 3) U-förmige Ausnehmungen 4' an den Plattenlängsseiten zwischen dem Zwischensteg 17 und den Plattenrändern 18, die sich, wenn die Trittelemente bzw. Spaltenplatten 2 in Reihenanordnung auf den Seitenwänden 7 und 8 randseitig aufgelegt und abgestützt sind, mit den angrenzenden Ausnehmungen 4' der benachbarten Platte 2 jeweils zu vollständigen Durchtrittsspalten 4 ergänzen, wie dies Fig. 1 und 6 zeigen.

In diesem montierten Zustand der Trittelemente 2 liegt der von den Durchtrittsöffnungen 4 freigehaltene, geschlossene Steg 17 senkrecht über der Harnrinne 11 des Aufnahmeraums 5. Die Breite des Steges 17 ist dabei zumindest gleich der Breite der Harnrinne 11 und übersteigt diese vorzugsweise um etwa 30%.

Wie insbesondere aus Fig. 5 ersichtlich ist, sind die Durchtrittsspalte 4 von Rippen 19 begrenzt, die sich in von der Plattenoberfläche 3 fortweisender Richtung im Querschnitt verjüngen und an ihrer Unterseite im mittleren Bereich mit einer Abtropfeinrichtung 20 versehen sind. Die Abtropfeinrichtung 20 ist von einer mittigen Einkerbung in Form eines nach unten offenen V in der Unterseite jeder Rippe 19 gebildet, derart, daß zwei Abtropfkanten 21 beidseits der vertikalen Längsmittelebene der Rippe 19 gebildet sind.

Die Seitenflächen der Rippen 19 weisen einen ebenen Anfangsflächenabschnitt 22 auf, der sich senkrecht an die Plattenoberfläche 3 anschließt, also keine Hinterschneidung zeigt, die einen vorzeitigen senkrechten Harnabriß nahe der vertikalen Mittelebene 23 der Durchtrittsspalte 4 verursachen könnte. Beidseits der Abtropfeinrichtung 20 weisen die Rippen 19 jeweils eine sich an die Abtropfeinrichtung 20 zur Plattenoberfläche 3 hin anschließende gekrümmte Fläche 24 auf, die in einen ebenen Schrägflächenabschnitt 25 zur Plattenoberflächen 3 hin übergeht, der wiederum an den ebenen senkrechten Anfangsflächenabschnitt 22 anschließt.

Durch dies Ausgestaltung sind die Öffnungsränder der Durchtrittsöffnungen bzw. - -spalte 4 für Kot und Harn mit Harnleitflächen ausgestattet, die dem Harn eine Fließrichtung zum Aufnahmeraum 5 hin vorgeben, die von der vertikalen Fallebene des Kotes entsprechend der vertikalen Mittelebene 23 der Durchtrittsspalte 4 weggerichtet ist. Dies die bietet die Voraussetzung für eine Trennung des Harns vom Kot bei der Ableitung von den Spaltenplatten 2 in den Aufnahmeraum 5. Die Bodenfläche 10 des Aufnahmeraums 5 ist dadurch in definierter Weise einerseits als Ablagerungsfläche für den durch die Durchtrittsöffnunge 4 hindurchgefallenen Kot, getrennt vom Harn, und andererseits als Harnauffang- und -abführfläche für den durch die Durchtrittsöffnungen 4 entlang den randseitigen Flächenabschnitten 22, 25, 24 hindurchgeleiteten Harn ausgebildet. Der sich an den Abtropfeinrichtungen 20 jeweils von den Rippen 19 lösende Harn fällt dabei mit deutlichem Querabstand von der vertikalen Mittelebene 23 auf die Bodenfläche 10 zwischen den sich unmittelbar unter den Durchtrittsspalten 4 dammartig aufbauenden Kotablagerungen 27, die in Fig. 6 angedeutet sind. Eine Kotablagerung im Bereich der Harnrinne 11 wird dabei durch den geschlossenen Zwischensteg 17, der die Harnrinne 11 in Längs- und Querrichtung überspannt, verhindert. In der Harnrinne 11 kann somit unbeeinträchtigt und getrennt von dem Kot der Tiere der Harn gesammelt und abgeleitet werden.

## Patentansprüche

1. Stallbodeneinrichtung zur Bildung eines Stallbodens für einen Aufenthalt von Tieren, insbesondere Rindern und Schweinen und Ableiten von Kot und Harn aus dem Aufenthaltsbereich in einen unteren Aufnahmeraum, mit einer Mehrzahl von Trittelementen, deren Oberflächen eine Aufenthaltsfläche für die Tiere darbieten und eine Anordnung von gemeinsamen Durchtrittsöffnungen für Kot und Harn zum Aufnahmeraum hin aufweisen, wobei der Aufnahmeraum eine Bodenfläche (10) aufweist, die einerseits als Ablagerungsfläche für den durch die Durchtrittsöffnung (4) durchgefallenen Kot getrennt von Harn und andererseits als Harnauffang- und Abführfläche für den durch die Durchtrittsöffnung (4) hindurchgeleiteten Harn ausgebildet sowie mit zumindest einer Harnsammel- und -ableitrinne (11) des Harns getrennt von dem abgelagerten Kot versehen ist, **dadurch gekennzeichnet, daß** die Öffnungsränder der gemeinsamen Durchtrittsöffnung (4) für Kot und Harn mit Harnleitflächen (22, 25, 24) versehen sind, die dem Harn eine aus der vertikalen Fallebene des Kotes fortweisende Fließrichtung zum Aufnahmeraum (5) hin vorgeben und daß die Durchtrittsspalten (4) von Rippen (19) begrenzt sind, die sich in von der Plattenoberfläche (3) fortweisender Richtung im Querschnitt verjüngen und an ihre Unterseite im mittleren Bereich mit einer Abtropfeinrichtung (20) versehen sind.

2. Einrichtung nach Anspruch 1, **dadurch gekennzeichnet, daß** die Trittelemente (2) von Spaltenplatten gebildet sind, deren Durchtrittsspalte (4) als gemeinsame Durchtrittsöffnungen für den Kot und Harn der Tiere die Bodenfläche (10) des Aufnahmeraumes (5) quer zur Längserstreckung der Harnrinne (11) überspannen.

3. Einrichtung nach Anspruch 1 oder 2 **dadurch gekennzeichnet, daß** der Aufnahmeraum (5) für den Kot und Harn der Tiere von einer Aufnahmewanne (6) mit einem Querschnitt in der Grundform eines U-Profils gebildet ist, dessen aufrechte Schenkel die Seitenwände (7,8) bilden und zwischen denen sich als U-Profilbasis der Wannenboden (9) mit seiner die Harnrinne (11) enthaltenden Oberfläche (10) erstreckt.

4. Einrichtung nach einem der Ansprüche 1 bis 3, **dadurch gekennzeichnet, daß** die Harnrinne (11) einen Verlauf parallel zur Längserstreckung der Seitenwände (7,8) des Aufnahmeraums (5) aufweist.

5. Einrichtung nach einem der Ansprüche 1 bis 4, **dadurch gekennzeichnet, daß** die Trittelemente (2) in einem über der Harnrinne (11) liegenden Bereich einen von Durchtrittsöffnungen (4) freigehaltenen, geschlossenen Steg (17) aufweisen.

6. Einrichtung nach einem der Ansprüche 1 bis 5, **dadurch gekennzeichnet, daß** die Bodenfläche (10) zur Harnrinne (11) hin ein Gefälle aufweist.

7. Einrichtung nach einem der Ansprüche 1 bis 6, **dadurch gekennzeichnet, daß** die Harnrinne (11) seitlich von zwei senkrechten parallelen Seitenwänden (14) begrenzt ist, die sich an die Bodenfläche (10) des Aufnahmeraums (5) anschließen.

8. Einrichtung nach einem der Ansprüche 3 bis 7, **dadurch gekennzeichnet, daß** die Seitenwände (7,8) des Aufnahmeraums (5) innenseitig mit Führungsschienen (15) für einen Kotschieber versehen sind, die lösbar an der Innenseite der Seitenwände (7,8) des Aufnahmeraums (5) angebracht sind.

9. Einrichtung nach einem der Ansprüche 1 bis 8, **dadurch gekennzeichnet, daß** der Aufnahmeraum (5) wandseitig mit einer oder mehreren Durchgangsöffnungen (16) für einen Leitungsanschluß eines Lüftungssystems versehen ist.

10. Einrichtung nach einem der Ansprüche 2 bis 9, **dadurch gekennzeichnet, daß** die Durchtrittsspalte (4) beidseits eines geschlossenen Zwischensteges (17) in Querausrichtung zu diesem angeordnet sind.

11. Einrichtung nach einem der Ansprüche 1 bis 10, **dadurch gekennzeichnet, daß** die Abtropfeinrichtung (20) von einer Einkerbung in der Unterseite jeder Rippe (19) gebildet ist.

12. Einrichtung nach Anspruch 11, **dadurch gekennzeichnet, daß** durch die Einkerbung zwei Abtropfkanten (21) beidseits der vertikalen Längsmittelebene der Rippe (19) gebildet sind.

13. Einrichtung nach einem der Ansprüche 1 bis 12, **dadurch gekennzeichnet, daß** die Seitenflächen der Rippen (19) einen ebenen Anfangsflächenabschnitt (22) aufweisen, der sich senkrecht an die waagerechte Plattenoberfläche (3) anschließt.

14. Einrichtung nach einem der Ansprüche 1 bis 13, **dadurch gekennzeichnet, daß** die Seitenflächen der Rippen (19) beidseits der Abtropfeinrichtung (20) jeweils eine sich an diese zur Plattenoberfläche (3) hin anschließende gekrümmte Fläche (24) umfassen, die in einen ebenen Schrägflächenabschnitt (25) zur Plattenoberfläche (3) hin übergeht.

15. Einrichtung nach einem der Ansprüche 1 bis 14, **dadurch gekennzeichnet, daß** die Breite des geschlossenen Steges (17) der Trittelemente (2) zumindest gleich der Breite der Harnrinne (11) in der Bodenfläche (10) des Aufnahmeraums (5) ist.

16. Einrichtung nach einem der Ansprüche 1 bis 15, **dadurch gekennzeichnet, daß** die Trittelemente (2) von einstückigen, selbsttragenden Betonformkörpern gebildet sind.

## Claims

1. Stable floor device for forming a stable floor for accommodating animals, particularly cattle and pigs, and for discharging dung and urine from the accommodation area into a receiving space, with a plurality of tread elements whose surfaces provide an accommodation area for the animals and exhibit an arrangement of common through openings for dung and urine leading to the receiving space, wherein the receiving space exhibits a floor area (10) which is on the one hand designed as a deposit area for the dung that has fallen through the opening (4), separated from the urine, and is on the other hand designed as a urine retention and discharge area for the urine conducted through opening (4), and which is provided with at least one urine collection and discharge channel (11) for the unne, separated from the deposited dung, **characterised in that** the opening edges of the common through opening (4) for dung and urine are provided with urine guide faces (22, 25, 24) which give the urine a direction of flow to the receiving space (5) continuing from the vertical plane of fall of the dung, and **in that** the opening gaps (4) are bounded by ribs (19) which reduce in cross-section in the direction pointing away from the plate surface (3), and are provided on their lower side, in the central area with a drip device (20).

2. Device according to claim 1, **characterised in that** the tread elements (2) are formed by column plates whose opening gap (4) span the floor area (10) of the receiving space transversely to the longitudinal extension of the urine channel (11) as common through openings for the dung and urine of the animals.

3. Device according to claim 1 or 2, **characterised in that** the receiving space (5) for the dung and urine of the animals is formed by a receiving tank (6) with a cross-section in the base shape of a U-profile whose upright legs form the lateral walls (7, 8) and between which the bottom of the tank (9) extends as a U-profile base with its surface (10) containing the urine channel (11).

4. Device according to one of claims 1 to 3, **characterised in that** the urine channel (11) exhibits a course that runs parallel with the longitudinal extension of the lateral walls (7,8) of the receiving space (5).

5. Device according to one of claims 1 to 4, **characterised in that** the tread elements (2) exhibit a closed bridge (17) kept free from openings (4) in an area located above the urine channel (11).

6. Device according to one of claims 1 to 5, **characterised in that** the floor area (10) is provided with a gradient toward the urine channel (11).

7. Device according to one of claims 1 to 6, **characterised in that** the unne channel (11) is bounded laterally by two perpendicular, parallel lateral walls (14) which are connected to the floor area (10) of the receiving space (5).

8. Device according to one of claims 3 to 7, **characterised in that** the lateral walls (7, 8) of the receiving space (5) are provided on the inside with guide rails (15) for a dung slide, which rails are fitted detachably on the inside of the lateral walls (7, 8) of the receiving space (5).

9. Device according to one of claims 1 to 8, **characterised in that** the receiving space (5) is provided on the wall side with one or more through openings (16) for a pipe connection of a ventilation system.

10. Device according to one of claims 2 to 9, **characterised in that** the through gaps (4) on Moth sides of a closed intermediate bridge (17) are arranged in the transverse direction to it.

11. Device according to one of claims 1 to 10, charactensed in that the drip device (20) is formed from a notch in the underside of each rib (19).

12. Device according to claim 11, **characterised in that** two drip edges (21) are formed by the notch on both sides of the vertical longitudinal central plane of the rib (19)

13. Device according to one of claims 1 to 12, **characterised in that** the lateral faces of the ribs (19) exhibit a flat initial surface section (22) which is connected perpendicularly to the horizontal plate surface (3).

14. Device according to one of claims 1 to 13, **characterised in that** the lateral faces of the ribs (19) on both sides of the drip device (20) each comprise a curved surface (24) connecting to the plate surface (3), which surface (24) extends into a flat oblique surface section (25) toward the plate surface (3).

15. Device according to one of claims 1 to 14, **characterised in that** the width of the closed bridge (17) of the tread elements (2) is at least equal to the width of the urine channel (11) in the floor area (10) of the receiving space (5).

16. Device according to one of claims 1 to 15, **characterised in that** the tread elements (2) are formed from integral, self-supporting concrete mouldings.

## Revendications

1. Aménagement de sol d'étable afin de former un sol d'étable pour un séjour d'animaux, en particulier des bovins et des porcs et d'évacuer les excréments et l'urine de la zone de séjour dans un espace de réception inférieur, comportant une pluralité d'éléments d'accès, dont les surfaces offrent une surface de séjour pour les animaux et présentent une disposition d'ouvertures de pénétration communes aux excréments et à l'urine vers l'espace de réception, l'espace de réception présentant une surface de fond (10) qui est conformée d'une part comme surface de dépôt pour les excréments tombés à travers l'ouverture de pénétration (4) et séparés de l'urine et d'autre part comme surface de réception et d'évacuation de l'urine guidée à travers l'ouverture de pénétration (4) et qui est pourvue d'au moins une rigole de collecte et d'évacuation d'urine (11) de l'urine séparée des excréments déposés, **caractérisé en ce que** les bords d'ouverture de l'ouverture de pénétration (4) commune aux excréments et à l'urine est pourvue de surfaces de guidage d'urine (22, 25, 24) qui déterminent une direction d'écoulement d'urine indiquant en continu depuis le plan vertical de chute des excréments vers l'espace de réception (5) et **en ce que** les fentes de pénétration (4) sont délimitées par des nervures (19) qui se réduisent en section transversale dans la direction indiquant en continu depuis la surface de plaque (3) et sont pourvues sur leur côté inférieur dans la zone centrale, d'un dispositif d'égouttage (20).

2. Aménagement selon la revendication 1, **caractérisé en ce que** les éléments d'accès (2) sont formés de plaques à fentes dont les fentes de pénétration (4) en tant qu'ouvertures de pénétration communes aux excréments et à l'urine enjambent la surface de fond (10) de l'espace de réception (5) transversalement à l'extension longitudinale de la rigole d'urine (11).

3. Aménagement selon la revendication 1 ou 2, **caractérisé en ce que** l'espace de réception (5) pour les excréments et l'urine des animaux est formé d'une cuve de réception (6) présentant une section transversale ayant la forme fondamentale d'un profilé en U dont les ailes droites forment les parois latérales (7, 8) et entre lesquelles le fond de cuve (9) en tant que base du profilé en U s'étend avec sa surface (10) contenant la rigole d'urine (11).

4. Aménagement selon l'une quelconque des revendications 1 à 3, **caractérisé en ce que** la rigole d'urine (11) présente un tracé parallèle à l'extension longitudinale des parois latérales (7, 8) de l'espace de réception (5).

5. Aménagement selon l'une quelconque des revendications 1 à 4, **caractérisé en ce que** les éléments d'accès (2) présentent dans une zone se trouvant au-dessus de la rigole d'urine (11) une entretoise (17) fermée et maintenue exempte d'ouvertures de pénétration (4).

6. Aménagement selon l'une quelconque des revendications 1 à 5, **caractérisé en ce que** la surface de fond (10) présente une inclinaison vers la rigole d'urine (11).

7. Aménagement selon l'une quelconque des revendications 1 à 6, **caractérisé en ce que** la rigole d'urine (11) est délimitée latéralement par deux parois verticales parallèles (14) qui sont contiguës à la surface de fond (10) de l'espace de réception (5).

8. Aménagement selon l'une quelconque des revendications 3 à 7, **caractérisé en ce que** les parois latérales (7, 8) de l'espace de réception (5) sont pourvues sur leur côté intérieur de rails de guidage (15) destinés à une racle pour excréments, qui sont placés de façon à être amovibles sur le côté intérieur des parois latérales (7, 8) de l'espace de réception (5).

9. Aménagement selon l'une quelconque des revendications 1 à 8, **caractérisé en ce que** l'espace de réception (5) est pourvu du côté paroi d'une ou de plusieurs ouvertures de passage (16) pour un raccordement de ligne d'un système de ventilation.

10. Aménagement selon l'une quelconque des revendications 2 à 9, **caractérisé en ce que** les fentes de pénétration (4) sont disposées des deux côtés d'une entretoise intermédiaire (17) fermée, transversalement à celle-ci.

11. Aménagement selon l'une quelconque des revendications 1 à 10, **caractérisé en ce que** le dispositif d'égouttage (20) est formé d'une entaille sur le côté inférieur de chaque nervure (19).

12. Aménagement selon la revendication 11, **caractérisé en ce que** deux arêtes d'égouttage (21) sont formées par l'entaille des deux côtés du plan longitudinal central vertical de la nervure (19).

13. Aménagement selon l'une quelconque des revendications 1 à 12, **caractérisé en ce que** les surfaces latérales des nervures (19) présentent une section de surface initiale plane (22) qui est verticalement contiguë à la surface de plaque (3) horizontale.

14. Aménagement selon l'une quelconque des revendications 1 à 13, **caractérisé en ce que** les surfaces latérales des nervures (19) des deux côtés du dispositif d'égouttage (20) comprennent chacune une surface courbée (24) contiguë à celui-ci vers la surface de plaque (3), ladite surface courbée se transformant en section de surface inclinée plane (25) vers la surface de plaque (3).

15. Aménagement selon l'une quelconque des revendications 1 à 14, **caractérisé en ce que** la largeur de l'entretoise (17) fermée des éléments d'accès (2) est au moins égale à la largeur de la rigole d'urine (11) dans la surface de fond (10) de l'espace de réception (5).

16. Aménagement selon l'une quelconque des revendications 1 à 15, **caractérisé en ce que** les éléments d'accès (2) sont formés de corps façonnés en béton autoportants, d'une seule pièce.
